# EUROPEAN PATENT SPECIFICATION

(11) **EP 1 373 964 B1**
(45) Date of publication and mention of the grant of the patent: **08.02.2006**
(21) Application number: 02735194.9
(22) Date of filing: 28.03.2002
(51) Int. Cl.: G02B 26/10, G02B 7/182

(54) **DEVICE AND A METHOD FOR DEFLECTING A LASER BEAM**
EINRICHTUNG UND VERFAHREN ZUM ABLENKEN VON LASERSTRAHLEN
DISPOSITIF ET PROCEDE POUR FLECHIR UN FAISCEAU LASER

(30) Priority: 02.04.2001 EP 01870074; 10.05.2001 US 290479 P
(43) Date of publication of application: 02.01.2004
(73) Proprietor: Newson Engineering N.V., 9290 Overmere-Berlare (BE)
(72) Inventor: VAN BIESEN, Marc, B-9000 Gent (BE)
(74) Representative: Brants, Johan P.E.
(86) International application number: PCT/EP2002/003493
(87) International publication number: WO 2002/079855

(56) References cited:
- US-A- 3 737 697
- US-A- 3 993 920
- US-A- 5 138 477
- US-A- 5 304 886
- US-A- 6 034 804

## Description

### TECHNICAL FIELD

The present invention relates to a device and a method for deflecting a laser beam of the type comprising a mirror and means able to position said mirror by angle rotation.

In particular the present invention is related to a device suitable for deflecting a laser beam, comprising a mirror and means for orientating said mirror, wherein said mirror is supported by an axis such that said mirror can angle rotate about said axis based on the electromotor principle.

### BACKGROUND ART

Lasers are currently used in numerous applications in which it is necessary to control the laser beam. A laser head in which the beam is deflected by reflection from two mirrors controlled by two galvanometers is commonly used for marking supports such as plastic or metals. Galvanometers are known means for controlling the rotation angle of the mirrors, wherein (electro)magnets within the galvanometers are brought in rotational movements. Each mirror is made to rotate in a controlled way about its own axis by the corresponding galvanometer, and the two axes are in general orthogonal positioned with respect to each other. In this way, the outgoing beam can be deflected according to a system of coordinates and its path can be controlled to obtain the required working. The present invention is related to similar devices in which two separate mirrors are able to deflect a laser beam in order to obtain all possible positions within an X-Y coordinate plane. The invention is in particular related to such a single device able to control the angle rotation of said mirror in a precise manner.

Another prior known method and device for the control of the angle rotational movement of these deflecting mirrors is the use of a plurality of electromagnets whereby elastic forces balance the magnetic forces acting upon a mirror.

In the present text 'angle rotation' means any rotational movement over an angular reach, which angular reach may be positive or negative and being in general smaller than 180°.

Other applications of these devices are for example in the medical field whereby for various treatments use is made of a laser beam controlled by means of a pair of galvanometers to execute a scanning movement.

The currently known deflection systems controlled by corresponding galvanometers are complicated, cumbersome and inaccurate. Furthermore their reaction time is long and becomes unacceptable. Another problem is the high impedance of the existing angle rotation devices, due to the high number of current wires within the electromagnets, which are needed to provide a reasonable strong magnetic field.

The purpose of the present invention is to provide an alternative for the commonly used galvanometers, such that the present invention provides a laser beam deflection device which is more compact and accurate and easy to fabricate and which permits a more precise and a more rapid manipulation of the laser beam. Another object is to provide an angle rotating device having a low impedance and as a result thereof provides for a more accurate and faster reaction time for the rotational movement.

### DISCLOSURE OF THE INVENTION

The present invention is related to a device for deflecting a laser beam, according to claim 1 and a method according to claim 16.

Essentially, the device and the method according to the invention make use of a magnetic field and a moving charged particle whereby a variation of at least one parameter results in a rotational movement of a mirror. The main technical aspect of the present invention is the use of the Lorentz force for providing said angular reach rotating to the mirror. A magnetic field B imparts a force on moving charged particles. The entire electromagnetic force on a charged particle with charge q and velocity v is called the Lorentz force after the Dutch physicist Hendrik A. Lorentz, and is given by: F= qE + qv * B.

The first term is contributed by the electric field which is in the preferred embodiments zero. The second term is the magnetic force and has a direction perpendicular to both the velocity v and the magnetic field B. The magnetic force is proportional to the charge q and to the magnitude of v* B. In terms of the angle α between v and B, the magnitude of the force equals qvB sinα. As a result the Lorentz force acts on the charged particle in a uniform magnetic field. If v is perpendicular to B (i.e., with the angle between v and B of 90º), the particle will follow a circular trajectory with a radius of r = mv/qB. If the angular reach is less than 90º, the particle orbit will be a helix with an axis parallel to the field lines. If the angular reach is zero, there will be no magnetic force on the particle, which will continue to move undeflected along the field lines. If a wire with a current i is placed in an external magnetic field B, the force on the wire will depend on the orientation of the wire. Since a current represents a movement of charges in the wire, the Lorentz force given in the above equation acts on the moving charges. Because these charges are bound to the conductor, the magnetic forces on the moving charges are transferred to the wire. The force on a small length d) of the wire depends on the orientation of the wire with respect to the field. The magnitude of the force is given by idlB sin w, where w is the angular reach area between B and dl. There is no force when w = σ or 180º, both of which correspond to a current along a direction parallel to the field. The force is at a maximum when the current and field are perpendicular to each other. The force is obtained from the equation and is given by: dF= idl*B. Again, the cross product denotes a direction perpendicular to both dl and B. It is clear that the device according to the invention is also applicable not only for deflecting laser beams, but also for controlling all functional elements, such as cutting tools or printer heads able to be supported by an axis or a shaft.

The use of said Lorentz force as a result of the interaction of charged particles having a charge q and velocity v within a magnetic field B for the control of angle rotation provides the advantages as explained above.

In a preferred embodiment the rotor is positioned inside a magnetic field generated by the discrete magnetic poles, whereby each angular reach defined by said magnetic poles has a spatial overlap with the corresponding angular reach defined by the conductor, whereby the excess of angular reach, i.e. the excess of overlap, defines the angular reach for the orientation of the mirror. This excess in the spatial overlap is an essential aspect of the present invention and will be completely understood with reference to the drawings.

In another preferred embodiment the means for providing a current are provided, comprising an electrical source connected to said conductor.

In another preferred embodiment the rotor consists of a circuit support whereon the conductor is provided connected to the axis and whereby the conductor comprises radial extending conductor parts. Said conductor defines a conductor angular reach, i.e. the angle between the most left and most right radial extending conductor part. In a preferred embodiment the conductor describes a circle segment. In an example the conductor extends in one or more turns or loops on a printed circuit board. The radial movement of the electrical or charged particle will provide for a maximization of the sin α (sin α = 1) and therefore for a maximization of the qvB sinα. In a preferred embodiment the current wires extend perpendicular to the magnetic field lines. In a preferred embodiment a rotor device is attached to the axis and said rotor is provided with a current wire or with current wires, of which an essential part extends radially.

In another preferred embodiment the area defined by the conductor has the shape of a circle segment, and the number of the conductor parts is for example 2, 3, 4, 5 or 6, provided in a parallel alignment on the printed circuit board.

In another preferred embodiment the magnetic field is generated by a number of discrete permanent magnetic poles.

In another preferred embodiment the permanent magnet poles are positioned concentric around the axis.

In another preferred embodiment the magnetic field lines extend perpendicular to the rotor.

In another preferred embodiment the angular reach of the magnetic poles is limited to 180° and preferably around 70°.

In another preferred embodiment the rotor extends in an angular reach area of about 90° and preferably perpendicular to said axis.

In another preferred embodiment the rotor consists essentially of a circuit printed on a circuit board and electrically connected and attached to the axis.

In another preferred embodiment the conductor angular reach is defined by a circuit comprising an electrical conductor provided in a specific pattern on the circuit support for example in a continuous circle segmented pattern around the axis having at least one, preferably more than one loop or turn.

In another preferred embodiment the flexible connecting means are provided for electrically coupling an electrical source with the rotor.

The invention also relates to a method for deflecting a laser beam according to claim 16.

The invention further relates to a laser beam deflecting apparatus according to claim 18, comprising two devices for deflecting a laser beam.

### BRIEF DESCRIPTION OF THE DRAWINGS

The invention will be more clearly understood from the non-limitative description and the attached drawings showing the most preferred embodiment of the present invention. In said drawings:
figure 1 is a schematic three-dimensional view of a preferred embodiment of the device according to the invention;
figure 2 is an axial cross-sectional view along line A-A of figure 1;
figure 3 is a radial cross-sectional view along line B-B of figure 2;
figure 4 shows schematic detailed views of the encircled fraction of figure 2;
figure 5 shows a planar view of another preferred embodiment of a rotor of the present invention having a non-symmetrical pattern.
figure 6 shows two cross-sectional views (left in radical direction, right in longitudinal direction) elucidating the magnetic field suitable for a rotor of figure 5; and
figure 7 shows schematically two oriented devices for deflecting a laser beam in the required directions.

### DESCRIPTION OF THE PREFERRED EMBODIMENTS

As explained above the invention is related to angle rotation means for the accurate angle rotation of an axis carrying a mirror. The angle rotation according to the invention is based on the interaction of an electrical current (charged particles having charge q and velocity v) within a magnetic field. Variation in one of said parameters can result in a force, the Lorentz force, which may result in an accurate and fast angle rotation of the axis. The resulting Lorentz force is sufficiently strong that an axis whereupon this force acts is brought into rotating over a specific angular reach area corresponding to parameters B, q and v. In the present application the preferred embodiment is a device in which a current wire is either directly or indirectly connected via a support to the axis to be angle rotated. When applying a current during a specific time interval through these electrical wires or through a circuit placed within the magnetic field a resulting Lorentz force will act upon the axis and will rotate said axis. The magnetic field may be provided by a permanent magnet, an electromagnet, or any other suitable magnetic field generating means. The Lorentz force acting upon said axis results in an angle rotation over the angular reach area dependent upon the product B, q and v. The interaction of these parameters B, q and v and the angle α provides for an accurate control of the angle of rotation.

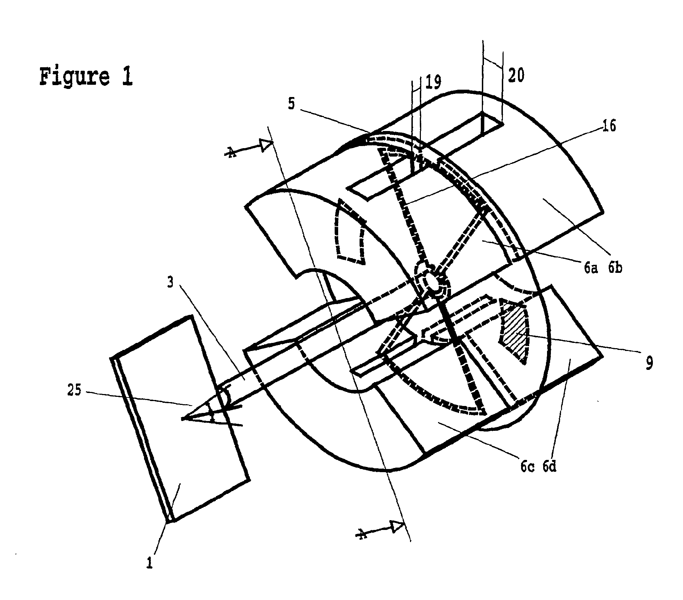

Figure 1 shows the basic elements of the device according to the invention wherein a mirror 1 is fixed on the end of the axis 3 having a rotation range 25. A support 5 carrying an electrical wire 16 is attached on this axis 3 and can rotate back and forwards. The support 5 is positioned between two pairs of magnetic anchors 6a/b and 6c/d providing the magnetic field B. The device further comprises electrical conductors or wires 16 provided on the support 5 and positioning measurement means 9.

Upon introduction of a current and more in particular a charged particle having a velocity v through current wires 16, the mirror 1 associated with its axis 3 will be forced to rotate due to the resulting Lorentz force. This electrical current may be sent through a circuit support 5 containing an electrical wire or conductor 16 in a specific arrangement, which support 5 is rigidly connected to the axis 3. In comparison with the principle of a motor the combination of the axis 3 and the circuit support 5 can be considered as forming a rotor. Said rotor 3, 5 is specifically mounted in a magnetic field B, which may be static or dynamic. Preferably the current runs perpendicular to the magnetic field B as depicted in the figures in order to obtain a maximum in the resulting Lorentz force. A maximum in the Lorentz force resulting from the presence of magnetic field B and the current will act upon the electrical wires or the circuit 16 of support 5 and as such upon said rotor axis 3. The mirror 1, which is preferably rigidly mounted on said axis 3, is as such forced to rotate. Positioning measurement systems such as different electronic regulators, known in the prior art will guarantee that a right angle rotation of the rotor and the mirror provides for a right position of the deflected laser beam when present.

On the rotor 5 current is provided through the conductor(s) 16. The rotor 5 consists essentially of a printed circuit board electrically connected to the axis 3. The conductor 16 describes two conductor angular reach areas in the form of a segment. The conductor 16 is therefore provided in two turns or loops in a continuous circle segmented pattern on the printed circuit board.

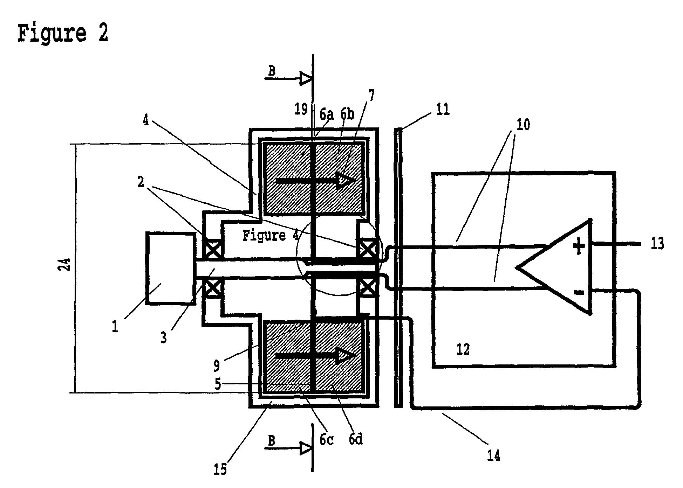

The device depicted in figure 2 consists essentially of a mirror 1 which is supported by an axis 3 such that said mirror 1 is able to rotate about said axis 3. Bearings 2 may be provided within the housing 15 of the deflecting device. The means for orientating said mirror 1 comprise a rotor being the rigid combination of the axis 3 and the support 5. The support 5 is provided with one and preferably with several current tracts, wires or conductors 16, which are electrically connected with an electrical source containing regulator 12. The stator of the motor concept consists essentially of a magnetic field and in a more preferred embodiment consists essentially of one or more pairs of magnet anchors 6a and 6b (6c/d). Further positioning measurement means 9 are provided in order to control in a precise manner the position of the mirror 1. As these positioning means are known in the prior art they will herein not be explained in detail.

Figure 2 shows the basic elements of the device according to the invention, inclusive the housing 15 and the regulator 12, whereby the mirror 1 is fixed on the axis 3 and the housing 15 is provided with bearings 2, to bear and let the axis 3 circulate. The support 5 is fixed on the axis 3 and rotates back and forwards in the sleeve 19 between the poles of two pairs of magnetic anchors 6a/b and 6c/d. The static magnetic field 7 is present between the poles of a magnetic anchor pair. The device further consists of electrical conductors 10 which connect the rotor with the regulator printed circuit board 11, on which the regulator 12 is mounted. Regulation is done by comparison of a control signal 13 with the signal 14 from the positioning measurement means 9, both signals sent to the regulator 12.

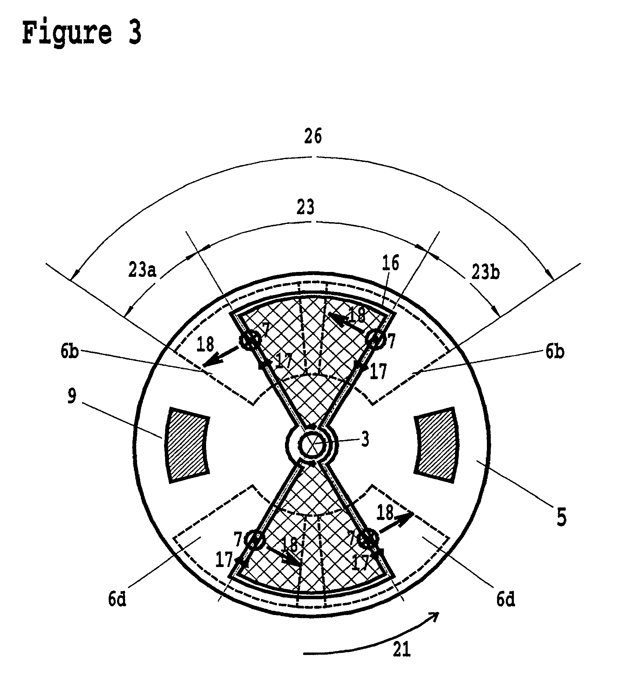

The magnetic field lines describe in cross sectional view a segmented area (dotted line in figure 3) overlapping the angular reach 23 of the conductor or in other terms angular reach area 23 is smaller than the angular reach 26.

In a preferred embodiment the support 5 can be constructed as a printed circuit board having its conductors embedded therein or with a conductive metal plate provided thereon. Several possibilities can be used for a circuit board such as a single side printed circuit board, a double side printed circuit board or a multi-layer printed circuit board. The electrical conductors 16 on this printed circuit board are provided in a specific pattern. They are positioned in closed circle segment loops around the axis 3. The number of loops can be 1, 2, 3 or more. The angular reach area 23 between the conductor 16 defines the rotation angular reach 25 of the mirror 1. The importance of the specific pattern is to create as much as radial extending current conductor parts (current perpendicular =qv) to magnetic field (=B).

Current 17 through these conductors 16 originates from and is regulated by the regulator 12. The support 5 and the mirror 1 are mounted on the axis 3.

The mirror 1 is able to reflect a laser beam (not shown) to a work piece (not shown). In order to let the laser beam describe a certain route, the mirror 1 has to rotate back and forwards, regulated by a regulation signal, generated by the regulator 12. In order to rotate back and forwards, the mirror 1 is fixed to the axis 3. The resulting force 18 acting on the rotor 3,5 rotates the mirror1. A preferred rotation range 25 of the mirror 1 is two times (back and forth) 22,5°.

The stator 6 can comprise permanent magnets or electromagnets. The stator 6 consists of one or more anchor pairs. In figure 1 two anchor pairs 6a/b and 6c/d are depicted. The two parts of an anchor pair are positioned pole to pole, separated by a thin air sleeve 19 wherein the rotor assembly (3, 5) can rotate freely.

A magnetic field has to be present, wherein the rotor assembly (3, 5) can rotate. The direction of the magnetic field 7 is preferably perpendicular to the current 17 through the electrical conductors 16 of the support 5, as shown in figures 2 and 3, in order to create the Lorentz force 18, which corresponds to the rotation 21 of the axis 3 and to the resulting oscillation of the mirror 1.

The angular reach of the anchors is preferably larger then the rotation range 25 of the support 5, in order to let the support 5 rotate over his range. In case the rotation range is 2 x 22,5°, the angular reach of the anchors is preferably about 70°.

Figure 1 shows further anchors with a sleeve 20 in order to close the magnetic field lines. The stator 6 is fixed permanently in the housing 15. The height of the stator 6 decides the inner height of the motor assembly. Preferably it will have a height 24 of 1 to 10 cm. The steering signal 17 is produced by the regulator 12. Besides the control signal 13, the regulator receives also a signal 14 from the positioning measurement 9.

Figure 3 shows schematically the capacitive measurement. One side of the capacitor(s) is (are) part of the support 5, the other side of the capacitor(s) is (are) part of the stator 6. Each position of the support 5 corresponds to another capacity value, as the plates of the capacitor 9 move against each other.

The regulator 12 is mounted on a printed circuit board (PCB) 11. The circuit on this PCB 11 regulates the current 17 through the electrical conductors of the rotor assembly (3, 5) by comparing the control signal 13 with the signal 14 of the positioning measurement 9.

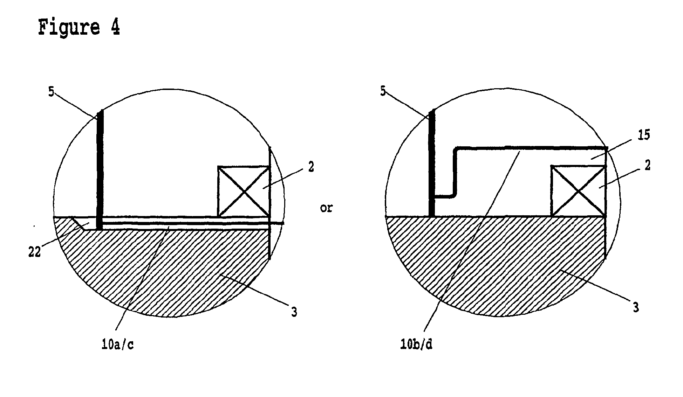

Figure 4 shows different ways of the electrical connection between the support 5 and the regulator 12. It can be done preferably by means of flexible conductive wires 10a, running through a sleeve 22, which is made in the axis 3 of the support 5 or by means of flexible conductive wires 10b, running through the housing 15 or by means of conductive spring material 10c, running through a sleeve 22, which is made in the axis 3 of the support 5 or by means of conductive spring material 10d, running through the housing 15.

The support 5 which is depicted in figure 3 consists of a base plate of the rotor, here as a PCB, mounted on the axis 3 with its electrical conductors 16, here two beside each other through which a current 17 runs. The direction is decided by the regulator 12, but due to the position of the support 5, the current 17 in the radial extending part runs perpendicular to the magnetic field vector 7. The resulting Lorentz force 18 results in the rotation 21 of the rotor and a part of the positioning measurement 9 (only the part on the support 5 is shown). The angular reach 26 defined by the electromagnet has an angular excess, i.e. angle 23a and angle 23b, over the angular reach 23 of the conductor 16.

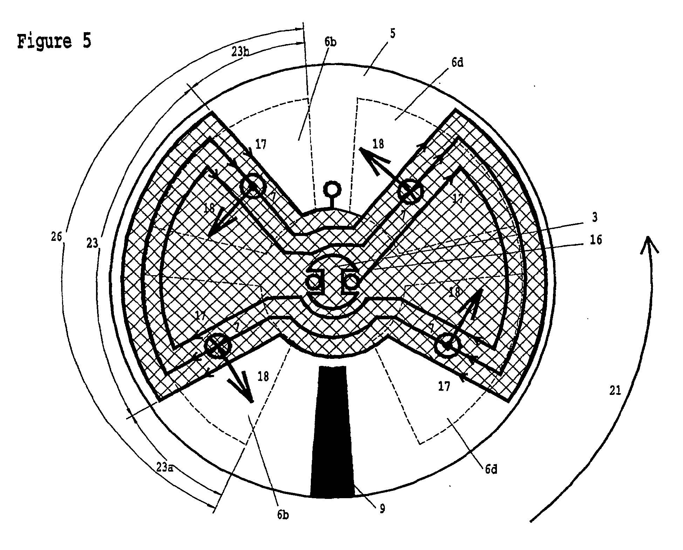

Figure 5 depicts a planar view of another preferred embodiment of a rotor of the present invention having a non-symmetrical pattern. The hatched part in the drawing defines a conductor area corresponding to the angular reach 23.

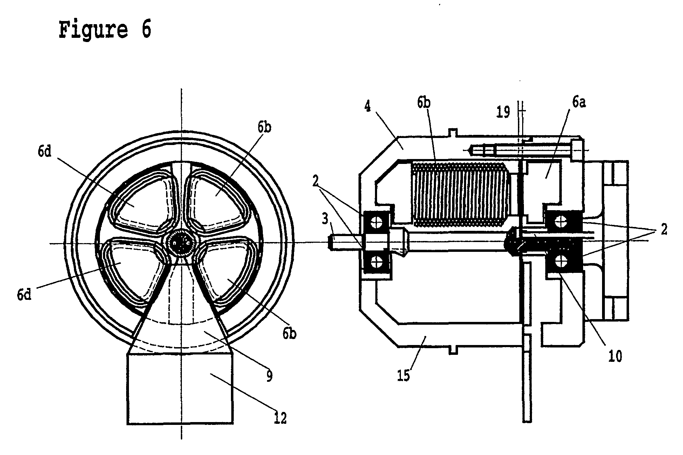

Figure 6 shows two cross-sectional views (left in radial direction and right in longitudinal direction) elucidating the magnetic field suitable for a rotor of figure 5.

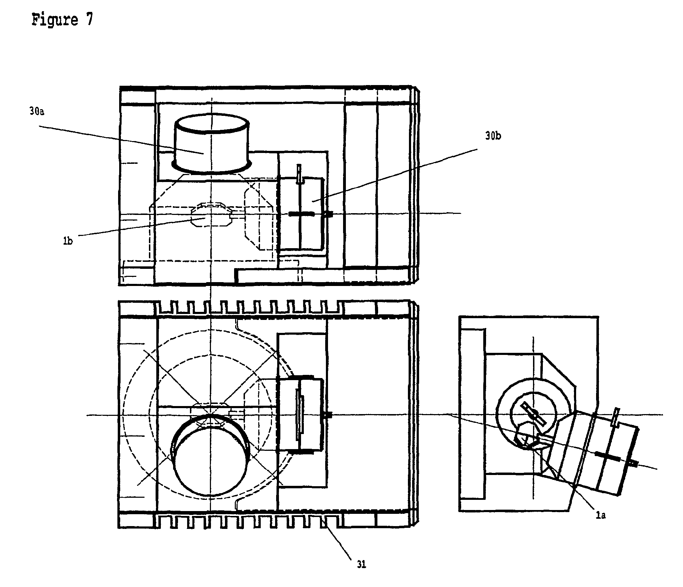

Figure 7 depicts schematically two mutual oriented devices for deflecting a laser beam 30a/30b able to deflect a laser beam in the required directions. Preferably the devices 30a/30b are housed in an aluminium housing 31.

It should be apparent that the disclosure and teachings of the present invention will suggest alternative designs to those skilled in the art.

## Claims

1. A device for deflecting a laser beam, comprising at least a single sided mirror, means for orientating said mirror, positioning measurement means (9) and a regulator (12),
wherein said single sided mirror (1) is attached on one end of an axis (3) and is arranged to rotate about said axis (3) and wherein said regulator (12) is arranged to regulate the current through a conductor (16), said conductor (16) comprising radially extending conductor parts defining a conductor angular reach (23),
and wherein the means for orientating said mirror (1) comprise means for providing a magnetic field and means for providing a charged particle having a velocity v_{⊥} moving through said conductor (16) provided on a rotor (5) which is connected to said axis (3) and
wherein the axis (3) is arranged to perform a rotation movement over less than 180°,
whereby the orientation of said mirror (1) is controlled by the resulting Lorentz forces (18) and
wherein the magnetic field is generated by magnetic anchors (6a, 6b, 6c, 6d)
whereby the angular reach (26) defined by each magnetic anchor has a spatial overlap with the corresponding angular reach (23) defined by the conductor (16), and whereby the excess of angular reach, of the anchor (23a, 23b) corresponds to the angular reach (25) for the orientation of the mirror (1).

2. A device according to claim 1, wherein the means for providing a current comprise an electrical source connected to said conductor (16).

3. Device according to any of claims 1 or 2, wherein the means for providing a magnetic field comprise a number of discrete magnetic poles and the means for providing a charged particle having a velocity v, comprise an electrical source generating the movement of electrical particles through the conductor (16) provided on the rotor (5).

4. A device according to any of claims 1 to 3, wherein the rotor (5) is positioned inside a magnetic field (7) generated by one or more pairs of magnetic anchors (6a, 6b, 6c, 6d), whereby the two parts of one anchor pair are positioned pole to pole, and wherein the electrical particles moving through said conductor (16) on said rotor (5) have at least one loop.

5. A device according to daim 4, wherein said pairs of magnetic anchors (6a, 6b, 6c, 6d) act on said loop, and wherein each pair of magnetic anchors generates a Lorentz force (18) in a same rotational direction.

6. A device according to any of claims 1 to 5, whereby the rotor (5) consists of a circuit support whereon the conductor (16) is provided connected to the axis (3).

7. A device according to claim 67, wherein the area defined by the conductor (16) has the shape of a circle segment, and the number of the conductor parts is for example 2, 3, 4, 5 or 6, provided in a parallel alignment on the printed circuit board.

8. A device according to any of claims 1 to 7, whereby the magnetic field (7) is generated by a number of discrete permanent magnetic poles.

9. A device according to claim 8, wherein the permanent magnetic poles are positioned concentric around the axis (3).

10. A device according to claim 1-9, wherein the magnetic field lines extend perpendicular to the rotor (5).

11. A device according to any of the claims 8, 9 or 10, wherein the angular reach (26) of the magnetic anchors is limited to 180° and preferably around 70°.

12. A device according to any of the previous claims, wherein the rotor (5) extends in an angular reach area of about 90° and preferably perpendicular to said axis (3).

13. A device according to any of the claims 1-12, wherein said rotor (5) consists essentially of a circuit printed on a circuit board and electrically connected and attached to the axis (3).

14. A device according to any of the claims 1-13, wherein said conductor angular reach (23) is defined by a circuit comprising an electrical conductor (16) provided in a specific pattern on the circuit support for example in a continuous circle segmented pattern around the axis (3) having at least one, preferably more than one loop or turn.

15. A device according to any of the previous claims 1-14, whereby flexible connecting means are provided for electrically coupling an electrical source with the rotor.

16. A method for deflecting a laser beam with the use of a device of any of claims 1-15 comprising a single mirror (1) supported by an axis (3) such that said mirror (1) can rotate about said axis (3), the method comprising:
a. generating a Lorentz force (18) by providing a magnetic field (7) and by providing means for providing a charged particle having a velocity v and moving through a conductor (16) provided on a rotor (5) which is connected to said axis (3), and
b. bringing the axis (3) whereon said mirror (1) is supported into rotation by acting said Lorentz force (18) onto the rotor (5) which is fixed to said axis (3), whereby the axis (3)performs a rotation over less than 180°.

17. A method according to claim 16, the method comprising:
a) generating a Lorentz force (18) by providing a magnetic field (7) and by providing means for providing a charged particle having a velocity v and moving through a conductor (16) provided on a rotor (5) which is connected to said axis (3), such that the resulting Lorentz force (18) is obtained,
whereby said magnetic field (7) comprises discrete magnetic poles and the means for providing a charged particle having a velocity v comprise an electrical source generating the movement of electrical particles through the conductor (16) provided on said rotor (5) and
whereby the rotor (5) is positioned inside the magnetic field (7) generated by one or more pairs of magnetic anchors (6a, 6b, 6c, 6d), whereby the two parts of one anchor pair are positioned pole to pole,
b) bringing the axis (3) whereon said mirror (1) is supported into rotation over a specific angular reach area by acting said Lorentz force (18) onto the rotor (5) which is fixed to said axis (3), and
c) defining the angular reach (25) for the orientation of the mirror (1) by controlling the angle rotation of said axis (3) whereby the reach of the positioning is defined by the excess of angular reach (23a, 23b) of the anchors such that said axis (3) is able to perform a rotational movement over less than 180°.

18. A laser beam deflecting apparatus comprising two devices according to any of the previous claims 1 to 15, the axis (3) thereof extends in an angular reach area with respect to each other and they are further positioned such that a laser beam is deflected from the mirror (1) of the first device to the mirror (1) of the second device.

## Patentansprüche

1. Vorrichtung zum Ablenken eines Laserstrahls, mit wenigstens einem einseitigen Spiegel (1), einer Einrichtung zum Ausrichten des Spiegels, einer Positionierungsmesseinrichtung (9) und einem Regler (12),
wobei der einseitige Spiegel (1) an einem Ende einer Achse (3) angebracht ist und für eine Rotation um die Achse (3) eingerichtet ist, und wobei der Regler (12) zum Regeln des Stroms durch einen Leiter (16) dient, wobei der Leiter (16) sich radial erstreckende Leiterteile aufweist, die einen Leiterwinkelbereich (23) definieren, und
wobei die Einrichtung zum Ausrichten des Spiegels (1) eine Einrichtung zum Erzeugen eines Magnetfeldes und eine Einrichtung zum Erzeugen eines geladenen Teilchens mit einer Geschwindigkeit v aufweist, welches sich durch den Leiter (16) bewegt, der auf einem Rotor (5) angeordnet ist, welcher mit der Achse (3) verbunden ist, und
wobei die Achse (3) dafür eingerichtet ist, eine Rotationsbewegung über weniger als 180° auszuführen,
wodurch die Ausrichtung des Spiegels (1) durch die sich ergebenden Lorentz-Kräfte (18) gesteuert wird, und wodurch das Magnetfeld durch Magnetanker (6a, 6b, 6c, 6d) erzeugt wird, wodurch der durch jeden Magnetanker erzeugte Winkelbereich (26) eine räumliche Überlappung mit dem entsprechenden Winkelbereich (23) besitzt, der durch den Leiter (16) definiert ist, und wodurch das Übermaß des Winkelbereichs des Ankers (23a, 23b) dem Winkelbereich (25) für die Ausrichtung des Spiegels (1) entspricht.

2. Vorrichtung nach Anspruch 1, wobei die Einrichtung zum Erzeugen eines Stroms aus einer mit dem Leiter (16) verbundenen elektrischen Quelle besteht.

3. Vorrichtung nach Anspruch 1 oder 2, wobei die Einrichtung zum Erzeugen eines Magnetfeldes aus einer Anzahl diskreter Magnetpole besteht und die Einrichtung für die Erzeugung eines geladenen Teilchens mit einer Geschwindigkeit v aus einer elektrischen Quelle besteht, die die Bewegung elektrischer Teilchen durch den auf dem Rotor (5) vorgesehenen Leiter (16) erzeugt.

4. Vorrichtung nach einem der Ansprüche 1 bis 3, wobei der Rotor (5) innerhalb eines durch einen oder mehrere Paare von Magnetankern (6a, 6b, 6c, 6d) erzeugten Magnetfeldes (7) positioniert ist, wodurch die zwei Teile von einem Ankerpaar von Pol zu Pol positioniert sind, und wobei die durch den Leiter (16) auf dem Rotor (5) sich bewegenden elektrischen Teilchen wenigstens eine Schleife aufweisen.

5. Vorrichtung nach Anspruch 4, wobei die Paare der Magnetanker (6a, 6b, 6c, 6d) auf die Schleife einwirken, und wobei jedes Paar der Magnetanker eine Lorentz-Kraft (18) in derselben Rotationsrichtung erzeugt.

6. Vorrichtung nach einem der Ansprüche 1 bis 5, wobei der Rotor (5) aus einem Schaltkreisträger besteht, auf dem der mit der Achse (3) verbundene Leiter (16) vorgesehen ist.

7. Vorrichtung nach Anspruch 6, wobei die durch den Leiter (16) definierte Fläche die Form eines Kreissegmentes hat und die Anzahl der Leiterteile, beispielsweise 2, 3, 4, 5 oder 6 ist, die in einer parallelen Ausrichtung auf der gedruckten Leiterplatte angeordnet sind.

8. Vorrichtung nach einem der Ansprüche 1 bis 7, wodurch das Magnetfeld (7) durch eine Anzahl diskreter Permanentmagnetpole erzeugt wird.

9. Vorrichtung nach Anspruch 8, wobei die Permanentmagnetpole konzentrisch um die Achse (3) herum positioniert sind.

10. Vorrichtung nach einem der Ansprüche 1 bis 9, wobei sich die Magnetfeldlinien senkrecht zu dem Rotor (5) erstrecken.

11. Vorrichtung nach einem der Ansprüche 8, 9 oder 10, wobei der Winkelbereich (26) der Magnetanker auf 180° und bevorzugt auf etwa 70° beschränkt ist.

12. Vorrichtung nach einem der vorstehenden Ansprüche, wobei sich der Rotor (5) in einer Winkelbereichszone von etwa 90° und bevorzugt senkrecht zu der Achse (3) erstreckt.

13. Vorrichtung nach einem der Ansprüche 1 bis 12, wobei der Rotor (5) im Wesentlichen aus einem auf eine Leiterplatte gedruckten Schaltkreis besteht und elektrisch mit der Achse (3) verbunden und darauf angebracht ist.

14. Vorrichtung nach einem der Ansprüche 1 bis 13, wobei der Leiterwinkelbereich (23) durch einen elektrischen Leiter (16) aufweisenden Schaltkreis definiert ist, der in einem spezifischen Muster auf dem Schaltkreisträger beispielsweise in einem zusammenhängenden Kreissegmentmuster um die Achse (3) mit wenigstens einer, bevorzugt mehr als einer Schleife oder Wicklung, definiert ist.

15. Vorrichtung nach einem der vorstehenden Ansprüche 1 bis 14, wodurch flexible Verbindungseinrichtungen zum elektrischen Verbinden einer elektrischen Quelle mit dem Rotor bereitgestellt werden.

16. Verfahren zum Ablenken eines Laserstrahls unter Verwendung einer Vorrichtung nach einem der Ansprüche 1 bis 15, welche einen Einzelspiegel (1) aufweist, der durch eine Achse (3) so gelagert ist, dass der Spiegel (1) um die Achse (3) rotieren kann, wobei das Verfahren die Schritte aufweist:
a) Erzeugen einer Lorentz-Kraft (18) durch Erzeugen eines Magnetfeldes (7) und durch Bereitstellen einer Einrichtung zum Erzeugen eines geladenen Teilchens mit einer Geschwindigkeit v und das sich durch einen Leiter (16) bewegt, der auf dem Rotor (5) vorgesehen ist, welcher mit der Achse (3) verbunden ist, und
b) In-Rotation-Versetzen der Achse (3), auf welcher der Spiegel (1) gelagert ist, indem die Lorentz-Kraft (18) auf den Rotor (5) einwirkt, welcher auf der Achse (3) befestigt ist, wodurch die Achse (3) eine Rotationsbewegung Ober weniger als 180° ausführt.

17. Verfahren nach Anspruch 16, wobei das Verfahren die Schritte aufweist:
a) Erzeugen einer Lorentz-Kraft (18) durch Erzeugen eines Magnetfeldes (7) und Bereitstellen einer Einrichtung zum Erzeugen eines geladenen Teilchens mit einer Geschwindigkeit v und das sich durch einen Leiter (16) bewegt, der auf einem Rotor (5) vorgesehen ist, welcher mit der Achse (3) verbunden ist, so dass die resultierende Lorentz-Kraft (18) erhalten wird,
wodurch das Magnetfeld (7) diskrete Magnetpole aufweist und die Einrichtung für die Erzeugung eines geladenen Teilchens mit einer Geschwindigkeit v aus einer elektrischen Quelle besteht, die die Bewegung elektrischer Teilchen durch den auf dem Rotor (5) vorgesehenen Leiter (16) erzeugt, und
wodurch der Rotor (5) innerhalb des Magnetfeldes (7) positioniert ist, das durch eines oder mehrere Paare von Magnetankern (6a, 6b, 6c, 6d) erzeugt wird, wodurch die zwei Teile eines Ankerpaares von Pol zu Pol positioniert sind,
b) In-Rotation-Versetzen der Achse (3), auf welcher der Spiegel (1) gelagert ist, über eine spezifische Winkelbereichszone, indem die Lorentz-Kraft (18) auf den Rotor (5) einwirkt, welcher auf der Achse (3) befestigt ist, und
(c) Definieren des Winkelbereichs (25) für die Orientierung des Spiegels (1) durch Steuern der Winkelrotation der Achse (3), wodurch der Bereich der Positionierung durch das Übermaß des Winkelbereichs (23a, 23b) der Anker so definiert ist, dass die Achse (3) in der Lage ist, eine Rotationsbewegung über weniger als 180° auszuführen.

18. Laserstrahlablenkungsvorrichtung, bestehend aus zwei Vorrichtungen gemäß einem der vorstehenden Ansprüche 1 bis 15, wobei sich deren Achse (3) in einer Winkelbereichszone in Bezug zueinander erstreckt und diese ferner so positioniert sind, dass ein Laserstrahl von dem Spiegel (1) der ersten Vorrichtung zu dem Spiegel (1) der zweiten Vorrichtung abgelenkt wird.

## Revendications

1. Dispositif de déflexion d'un faisceau laser, comprenant au moins un miroir simple face (1), des moyens d'orientation dudit miroir, des moyens de mesure de position (9) et un régulateur (12),
dans lequel ledit miroir simple face (1) est fixé sur une extrémité d'un axe (3) et est disposé de manière à tourner autour dudit axe (3) et dans lequel ledit régulateur (12) est disposé de manière à réguler le courant à travers un conducteur (16), ledit conducteur (16) comprenant des parties conductrices s'étendant radialement définissant une portée angulaire de conducteur (23),
et dans lequel les moyens d'orientation dudit miroir (1) comprennent des moyens de production d'un champ magnétique et des moyens de production d'une particule chargée ayant une vitesse v se déplaçant à travers ledit conducteur (16) disposé sur un rotor (5) qui est connecté audit axe (3) et
dans lequel l'axe (3) est disposé de manière à réaliser un mouvement de rotation sur moins de 180°,
moyennant quoi l'orientation dudit miroir (1) est contrôlée par les forces de Lorentz résultantes (18) et
dans lequel le champ magnétique est produit par des ancres magnétiques (6a, 6b, 6c, 6d),
moyennant quoi la portée angulaire (26) définie par chaque ancre magnétique présente un chevauchement spatial avec la portée angulaire correspondante (23) définie par le conducteur (16) et moyennant quoi l'excès de portée angulaire de l'ancre (23a, 23b) correspond à la portée angulaire (25) pour l'orientation du miroir (1).

2. Dispositif selon la revendication 1, dans lequel les moyens de production d'un courant comprennent une source électrique connectée audit conducteur (16).

3. Dispositif selon la revendication 1 ou la revendication 2, dans lequel les moyens de production d'un champ magnétique comprennent un certain nombre de pôles magnétiques discrets et les moyens de production d'une particule chargée ayant une vitesse v, comprennent une source électrique produisant le mouvement de particules électriques à travers le conducteur (16) disposé sur le rotor (5).

4. Dispositif selon l'une quelconque des revendications 1 à 3, dans lequel le rotor (5) est situé dans un champ magnétique (7) produit par une ou plusieurs paires d'ancres magnétiques (6a, 6b, 6c, 6d), moyennant quoi les deux parties d'une paire d'ancres sont situées pôle à pôle, et dans lequel les particules électriques se déplaçant à travers ledit conducteur (16) sur ledit rotor (5) présentent au moins une boucle.

5. Dispositif selon la revendication 4, dans lequel lesdites paires d'ancres magnétiques (6a, 6b, 6c, 6d) agissent sur ladite boucle, et dans lequel chaque paire d'ancres magnétiques produit une force de Lorentz (18) dans une même direction de rotation.

6. Dispositif selon l'une quelconque des revendications 1 à 5, moyennant quoi le rotor (5) comprend un support de circuit sur lequel le conducteur (16) est disposé, connecté à l'axe (3).

7. Dispositif selon la revendication 6, dans lequel la surface définie par le conducteur (16) présente la forme d'un segment de cercle, et le nombre de parties du conducteur est par exemple 2, 3, 4, 5 ou 6 disposées selon un alignement parallèle sur la carte de circuit imprimé.

8. Dispositif selon l'une quelconque des revendications 1 à 7, moyennant quoi le champ magnétique (7) est produit par un certain nombre de pôles magnétiques permanents discrets.

9. Dispositif selon la revendication 8, dans lequel les pôles magnétiques permanents sont situés de manière concentrique autour de l'axe (3).

10. Dispositif selon l'une quelconque des revendications 1 à 9, dans lequel les lignes de champ magnétique s'étendent perpendiculairement au rotor (5).

11. Dispositif selon l'une quelconque des revendications 8, 9, ou 10, dans lequel la portée angulaire (26) des ancres magnétiques est limitée à 180° et est de préférence environ 70°.

12. Dispositif selon l'une quelconque des revendications précédentes, dans lequel le rotor (5) s'étend dans une surface de portée angulaire d'environ 90° et de préférence perpendiculaire audit axe (3).

13. Dispositif selon l'une quelconque des revendications 1 à 12, dans lequel ledit rotor (5) comprend essentiellement un circuit imprimé sur une carte de circuit et est connecté électriquement et fixé à l'axe (3).

14. Dispositif selon l'une quelconque des revendications 1 à 13, dans lequel ladite portée angulaire de conducteur (23) est définie par un circuit comprenant un conducteur électrique (16) disposé en une configuration spécifique sur le support de circuit par exemple en une configuration continue en segment de cercle autour de l'axe (3) ayant au moins une, de préférence, plusieurs boucles ou tours.

15. Dispositif selon l'une quelconque des revendications 1 à 14, dans lequel des moyens de connexion flexibles sont disposés de manière à coupler électriquement une source électrique au rotor.

16. Procédé de déflexion d'un faisceau laser au moyen d'un dispositif selon l'une quelconque des revendications 1 à 15 comprenant un miroir simple face (1) soutenu par un axe (3) de sorte que ledit miroir (1) puisse tourner autour dudit axe (3), le procédé comprenant :
a) la production d'une force de Lorentz (18) au moyen d'un champ magnétique (7) et de moyens de production d'une particule chargée ayant une vitesse v et se déplaçant à travers un conducteur (16) disposé sur un rotor (5) qui est connecté audit axe (3), et
b) la mise en rotation de l'axe sur lequel se trouve ledit miroir en appliquant ladite force de Lorentz (18) sur le rotor (5) qui est fixé audit axe (3) moyennant quoi l'axe (3) réalise un mouvement de rotation sur moins de 180°.

17. Procédé selon la revendication 16, le procédé comprenant :
a) la génération d'une force de Lorentz (18) au moyen d'un champ magnétique et des moyens de production d'une particule chargée ayant une vitesse v et se déplaçant à travers un conducteur (16) disposé sur un rotor (5) qui est connecté audit axe (3), de sorte que la force de Lorentz résultante (18) est obtenue,
moyennant quoi ledit champ magnétique (17) comprend des pôles magnétiques discrets et les moyens de production d'une particule chargée ayant une vitesse v comprennent une source électrique produisant le mouvement de particules électriques à travers le conducteur (16) disposé sur ledit rotor (5), et
moyennant quoi le rotor (5) est situé à l'intérieur du champ magnétique (7) produit par une ou plusieurs paires d'ancres magnétiques (6a,6b,6c,6d), moyennant quoi les deux parties d'une paire d'ancres sont disposées pôle à pôle,
b) la rotation de l'axe (3) sur lequel ledit miroir (1) est supporté sur une surface de portée angulaire spécifique en appliquant ladite force de Lorentz (18) sur le rotor (5) qui est fixé audit axe (3), et
c) la définition de la portée angulaire (25) pour l'orientation du miroir (1) en contrôlant la rotation angulaire dudit axe (3), moyennant quoi la portée du positionnement est définie par l'excès de portée angulaire (23a,23b) des ancres de sorte que ledit axe (3) est capable de réaliser un mouvement de rotation sur moins de 180°.

18. Appareil de déflexion d'un faisceau laser comprenant deux dispositifs selon l'une quelconque des revendications 1 à 15, les axes (3) de ceux-ci s'étendant dans une surface de portée angulaire l'un par rapport à l'autre et étant en outre situés de manière à ce qu'un faisceau laser est dévié du miroir (1) du premier dispositif vers le miroir (1) du second dispositif.
